# EUROPÄISCHE PATENTSCHRIFT

(11) **EP 2 205 658 B1**
(45) Veröffentlichungstag und Bekanntmachung des Hinweises auf die Patenterteilung: **18.07.2012**
(21) Anmeldenummer: 07821852.6
(22) Anmeldetag: 25.10.2007
(51) Int. Cl.: C08G 65/00, C08G 65/30

(54) **VERFAHREN ZUR HERSTELLUNG VON POLYETHERALKOHOLEN AUS UNGESÄTTIGTEN STARTERN MIT AKTIVEN WASSERSTOFFATOMEN**
PROCESS FOR PREPARING POLYETHER ALCOHOLS FROM UNSATURATED STARTERS WITH ACTIVE HYDROGEN ATOMS
PROCÉDÉ DE PRODUCTION DE POLYÉTHER-ALCOOLS À PARTIR D'INITIATEURS INSATURÉS PRÉSENTANT DES ATOMES D'HYDROGÈNE ACTIFS

(43) Veröffentlichungstag der Anmeldung: 14.07.2010
(73) Patentinhaber: BASF SE, 67056 Ludwigshafen (DE)
(72) Erfinder: GROSCH, Georg Heinrich, 67098 Bad Dürkheim (DE); ZIPPLIES, Matthias, 67434Neustadt (DE); OSTROWSKI, Thomas, 68199 Mannheim (DE); ANNEN, Ulrich, 67454 Hassloch (DE); KLUMPE, Markus, 68163 Mannheim (DE)
(86) Internationale Anmeldenummer: PCT/EP2007/061489
(87) Internationale Veröffentlichungsnummer: WO 2009/052864

(56) Entgegenhaltungen:
- EP-A- 0 736 553
- EP-A- 0 850 894
- EP-A- 1 069 139
- DE-A1- 10 020 670

## Beschreibung

Die vorliegende Erfindung betrifft ein Verfahren zur Herstellung von Polyetheralkoholen durch Umsetzung von mindestens einem Alkylenoxid mit mindestens einem ungesättigten Starter mit mindestens einem aktiven Wasserstoffatom pro Molekül unter basischer Katalyse,
dadurch gekennzeichnet, dass man die Alkoxylierung in mindestens zwei Stufen durchführt,
wobei man in Stufe (I) die Alkoxylierung des oder der Starter mit maximal 10 mol Alkylenoxid pro mol Starter mit einer Katalysatorkonzentration von maximal 0,00415 mol an basischem Katalysator pro Mol Starter durchführt, und
in Stufe (II) und den gegebenenfalls folgenden Stufen den oder die alkoxylierten Starter aus Stufe (I) mit weiterem Alkylenoxid bei einer Katalysatorkonzentration von mindestens 0,015 mol an basischem Katalysator pro mol Starter umsetzt.

Alkoxylierte Alkohole lassen sich vielseitig verwenden, beispielsweise als Emulgatoren und als oder zur Herstellung von Fließverbesserern von Baumaterialien wie beispielsweise Beton. Man stellt sie üblicherweise durch Alkoxylierung von Alkoholen her.

EP 1,069,139 beschreibt neben der Herstellung und Verwendung von wässrigen Polymerdispersionen die Herstellung von Allyl- oder Vinyletheralkoholalkoxylaten durch Umsetzung von Allyl- oder Vinyletheralkoholen (z. B. 4-Hydroxybutylvinylether) unter basischer Katalyse (Natriummethanolat als Katalysator) mit Alkylenoxid (Ethylenoxid und/oder Propylenoxid). Die Umsetzung des 4-Hydroxybutylvinylethers mit Alkylenoxid erfolgt einstufig nach Zugabe von 0,2 mol Natriummethanolat-Lösung als Katalysator.

DE 100,20,670 beschreibt polyalkylenglykolmodifizierte Organosiloxanylderivate, die durch Umsetzung von Organosiloxanen mit Vinyletheralkoxylaten erhalten werden. Derartige Vinyletheralkoxylate werden ebenfalls durch Alkoxylierung von Vinyletheralkoholen (Hydroxybutylvinylether) unter basischer Katalyse (0,2 mol Natriummethanolat-Lösung) hergestellt.

In den zitierten Schriften wird beschrieben, dass der ungesättigte Starter zur Umsetzung mit dem Alkylenoxid mit einer relativ hohen Konzentration an basischem Katalysator (0,459 mol Natriummethanolat-Lösung pro mol Vinyletheralkohol) vorgelegt wird. Hohe Konzentrationen von basischem Katalysator führen zu einer hohen Reaktionsgeschwindigkeit des Alkylenoxids mit dem Starter, was aus Gründen der Raum-ZeitAusbeute und somit der Wirtschaftlichkeit des Verfahrens sehr wünschenswert ist.

Dynamische Differenzkalorimetriemessungen an Mischungen von empfindlichen Startern wie insbesondere Allyl- oder Vinyletheralkoholen mit basischen Katalysatoren, beispielsweise Natrium- oder Kaliumhydroxid oder -methanolat, ergeben jedoch, dass bei höheren Katalysatorkonzentrationen (größer 0,07 mol basischer Katalysator pro mol Starteralkohol) diese Mischungen von Allyl- oder Vinyletheralkoholen mit den basischen Katalysatoren bereits bei Onset-Temperaturen von 150 bis 170°C Nebenreaktionen zeigen, die so exotherm sind, dass sie zu unbeherrschbaren Zuständen im Reaktor führen.

Unter Onset-Temperaturen werden im Rahmen der vorliegenden Erfindung solche Temperaturen verstanden, bei denen gefährliche exotherme Reaktionen (größer 200 kJ/kg) aufzutreten beginnen. Onset-Temperaturen kann man vorteilhaft durch Differenzkalorimetrie (DSC), beispielsweise durch dynamische Differenzkalorimetrie, bestimmen. Da derart bestimmte Onset-Temperaturen eine Abhängigkeit von der Heizrate der dynamischen Differenzkalorimetrie aufweisen, werden die genannten Onset-Temperaturen stets auf eine Heizrate von 2,5 K/min (bzw. 2,5 °C/min) bezogen.

Dieser Befund war umso überraschender, da Vinyletheralkohole in der Regel mit Basen (z.B. KOH) stabilisiert werden und die reinen, mit Basen stabilisierten Vinyletheralkohol bei dynamischen Differenzkalorimetriemessungen in der Regel erst ab 320 bis 350°C diese Nebenreaktionen zeigen.

Um die Sicherheit einer Alkoxylierungsanlage zu gewährleisten, ist diese so zu betreiben, dass die durch die Reaktionsführung höchste erreichbare Temperatur, die im Extremfall einige Zeit anliegen kann, ca. 100 °C niedriger liegt als die niedrigste Onset-Temperatur einer exothermen Nebenreaktion.

Um eine Alkoxylierungsanlage sicher und zugleich wirtschaftlich betreiben zu können, sollte die Onset-Temperatur der Nebenreaktion 290°C nicht unterschreiten.

Es bestand also die Aufgabe, ein Verfahren zur Umsetzung von ungesättigten Verbindungen, die mindestens ein aktives Wasserstoffatom pro Molekül aufweisen, mit Alkylenoxiden unter basischer Katalyse zu finden, das wirtschaftlich ist, also hohe Raum-Zeit-Ausbeuten erlaubt, und die Sicherheit der Produktionsanlage gewährleistet.

Eine mögliche Lösung, um die Alkoxylierung solcher sensibler Starter möglich zu machen, wäre, die Alkoxylierungsanlagen mit umfangreichen Sicherheitsmaßnahmen wie zum Beispiel Quenchbehältern auszurüsten. Ein Quenchbehälter ist in der Regel ein großer Druckbehälter, dessen Volumen ein Vielfaches des zu produzierenden Ansatzes beträgt und der immer zu einem gewissen Prozentsatz mit Wasser oder einer anderen Flüssigkeit gefüllt ist. Im Fall, dass während einer Alkoxylierung die Temperatur im Reaktor einen Wert innerhalb der 100 K-Zone der Onset-Temperatur erreicht, wird der Reaktorinhalt in sehr kurzer Zeit durch das Sicherheitssystem in den Quenchbehälter gedrückt und so die ungewollte Reaktion gestoppt. Der Einbau von Quenchbehältern ist jedoch mit hohen Investitionen verbunden und in bestehenden Anlagen aufgrund räumlicher Begrenzungen auch nicht immer möglich. Solche zusätzlichen Sicherheitsmaßnahmen sind also in der Regel sehr aufwändig.

Die Aufgabe konnte durch das eingangs definierte Verfahren gelöst werden.

Untersuchungen ergeben, dass die Onset-Temperaturen für die gefährlichen exothermen basenkatalysierten Nebenreaktionen der ungesättigten Starter eine Abhängigkeit von der Konzentration des basischen Katalysators im Starter aufweisen.

Bei dem erfindungsgemäßen Verfahren zur Herstellung von Polyetheralkoholen durch Umsetzung von mindestens einem Alkylenoxid mit mindestens einem ungesättigten Starter mit mindestens einem aktiven Wasserstoffatom pro Molekül unter basischer Katalyse geht man so vor,
dass man die Alkoxylierung in mindestens zwei Stufen, beispielsweise zwei bis vier Stufen, insbesondere zwei Stufen durchführt,
wobei man in Stufe (I) die Alkoxylierung des oder der Starter mit maximal 10 mol Alkylenoxid pro mol Starter mit einer Katalysatorkonzentration von maximal 0,00415 mol an basischem Katalysator pro Mol Starter durchführt, und
in Stufe (II) und den gegebenenfalls folgenden Stufen den oder die alkoxylierten Starter aus Stufe (I) mit weiterem Alkylenoxid bei einer Katalysatorkonzentration von mindestens 0,015 mol an basischem Katalysator pro mol Starter umsetzt.

Unter Startern werden in einer Ausführungsform der vorliegenden Erfindung ethylenisch ungesättigte Moleküle mit mindestens einem aktiven Wasserstoffatom pro Molekül verstanden, insbesondere Amine und Alkohole mit mindestens einer ethylenischen Doppelbindung pro Molekül. Vorzugsweise werden Starter gewählt aus Etheraminen und Etheralkoholen mit mindestens einer ethylenischen Doppelbindung pro Molekül, beispielsweise aus Etheralkoholen der allgemeinen Formel I 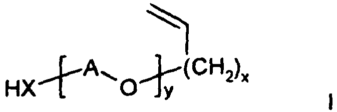 wobei die Variablen wie folgt definiert sind:
X ist N-H oder vorzugsweise Sauerstoff,
x ist eine ganze Zahl im Bereich von null bis vier, bevorzugt null oder eins,
y ist null oder eins,
wobei entweder x oder y ungleich null sind
oder x und y beide ungleich null sind,

A ist gewählt aus C₂-C₁₀-Alkylengruppen, verzweigt oder vorzugsweise linear, beispielsweise CH(CH₃)-CH₂, [CH(CH₃)]₂, bevorzugt (CH₂)₂, (CH₂)₃, (CH₂)₄, (CH₂)₅, (CH₂)₆, (CH₂)₇, (CH₂)₈, (CH₂)₉, (CH₂)₁₀, insbesondere lineares C₂-C₆-Alkylen wie (CH₂)₂, (CH₂)₃, (CH₂)₄, (CH₂)₅, (CH₂)₆, und (Poly)alkylenoxiden, insbesondere Polyethylenoxiden, beispielsweise (CH₂)₂-O-(CH₂)₂, [(CH₂)₂-O]₂-(CH₂)₂, [(CH₂)₂-O]₃-(CH₂)₂, [(CH₂)₂-O]₄-(CH₂)₂,

Beispiele für bevorzugte Verbindungen der Formel I sind Allylalkohol, 2-Hydroxyethylvinylether, 3-Hydroxypropylvinylether, 4-Hydroxybutylvinylether, 5-Hydroxypentylvinylether, 6-Hydroxyhexylvinylether, Diethylenglykolmonovinylether, Triethylenglyolmonovinylether, 3-Aminopropylvinylether oder Mischungen davon.

In einer Ausführungsform der vorliegenden Erfindung werden Starter gewählt aus Allyletheralkoholen oder bevorzugt Vinyletheralkoholen. Ganz besonders bevorzugt ist 4-Hydroxybutylvinylether.

In einer Ausführungsform der vorliegenden Erfindung setzt man mehrere Starter ein, die vorzugsweise jeweils Verbindungen der allgemeinen Formel I sind. Bevorzugt ist jedoch, das erfindungsgemäße Verfahren mit nur einem Starter durchzuführen.

In einer anderen Ausführungsform der vorliegenden Erfindung setzt man als Starter eine Mischung ein, die zu mindestens 10 Gew.-% mindestens eine Verbindung der allgemeinen Formel I enthält und weiterhin bis zu 90 Gew.-% einen Alkohol oder ein Amin ohne ethylenische Doppelbindung, beispielsweise ein C₁-C₁₀-Alkanol oder ein C₁-C₁₀-Amin.

Unter Alkylenoxiden können im Rahmen der vorliegenden Erfindung ein oder mehrere C₂-C₁₀-Alkylenoxide eingesetzt werden. Als Alkylenoxid kann man bevorzugt Butylenoxid und insbesondere Ethylenoxid oder Propylenoxid einsetzen, weiterhin sind Gemische von Ethylenoxid mit Propylenoxid und/oder Butylenoxid bevorzugt.

Wenn man mehrere Alkylenoxide einsetzt, kann man die Alkylenoxide je nach Durchführungsvariante des erfindungsgemäßen Verfahrens als Block oder statistisch verteilt auf den Starter aufpolymerisieren.

In einer Ausführungsform der vorliegenden Erfindung verwendet man für Stufe (I) des erfindungsgemäßen Verfahrens das gleiche Alkylenoxid wie für Stufe (II) und gegebenenfalls folgende Stufen. In einer anderen Ausführungsform der vorliegenden Erfindung verwendet man für Stufe (II) und gegebenenfalls folgende Stufen des erfindungsgemäßen Verfahrens ein anderes Alkylenoxid bzw. Gemisch von Alkylenoxiden als für Stufe (I) des erfindungsgemäßen Verfahrens.

Das erfindungsgemäße Verfahren führt man in Gegenwart von basischem Katalysator durch. Geeignet sind basische Erdalkalimetallverbindungen und insbesondere basische Alkalimetallverbindungen, beispielsweise Erdalkalimetalloxide, Alkalimetallcarbonate, Erdalkalimetallhydroxide, Alkalimetallhydroxide, Erdalkalimetallalkoholate und Alkalimetallalkoholate, insbesondere Alkalimetall-C₁-C₄-Alkanolate.

Bevorzugt werden Hydroxide, Oxide und Alkoholate von Natrium, Kalium, Rubidium und Cäsium sowie Calcium und Magnesium.

Besonders bevorzugt werden Hydroxide und Alkoholate von Natrium und Kalium. Unter den Alkoholaten sind die Methanolate bevorzugt. Besonders bevorzugt sind Natriumhydroxid, Kaliumhydroxid, Natriummethanolat und Kaliummethanolat. Auch Gemische von zwei oder mehreren basischen Alkalimetallverbindungen sind geeignet.

Im erfindungsgemäßen Verfahren in Stufe (I) setzt man den oder die Starter mit Alkylenoxid um bei einer Katalsatorkonzentration von maximal 0,00415 mol basischem Katalysator pro mol Starter und bevorzugt 0,00332 mol basischem Katalysator pro mol Starter.

In Stufe (I) des erfindungsgemäßen Verfahrens setzt man den bzw. die Starter mit 3 bis 10, bevorzugt 4 bis 8, besonders bevorzugt 5 bis 7 Mol Alkylenoxid pro mol Starter um.

In einer Ausführungsform der vorliegenden Erfindung führt man Stufe (I) des erfindungsgemäßen Verfahrens bei Reaktionstemperaturen von 110°C bis 180°C, bevorzugt 120°C bis 170°C, besonders bevorzugt 130°C bis 160°C durch.

In einer Ausführungsform der vorliegenden Erfindung führt man Stufe (I) des erfindungsgemäßen Verfahrens bei Normaldruck (1 bar) durch. In einer anderen Ausführungsform der vorliegenden Erfindung führt man Stufe (I) des erfindungsgemäßen Verfahrens bei erhöhtem Druck durch, beispielsweise bei 1,01 bis 20 bar.

Nach der Durchführung von Stufe (I) des erfindungsgemäßen Verfahrens erhält man alkoxylierten Starter, im Rahmen der vorliegenden Erfindung auch Starteralkoxylat genannt.

Das Starteralkoxylat aus Stufe (I) wird anschließend erfindungsgemäß in mindestens einer weiteren Stufe, beispielsweise in Stufe (II), mit weiterem Alkylenoxid, das ungleich oder vorzugsweise gleich sein kann wie Alkylenoxid aus Stufe (I), unter basischer Katalyse umgesetzt, wobei man die Katalysatorkonzentration im Starteralkoxylat aus Stufe (I) auf Werte von mindestens 0,015 mol basischem Katalysator pro mol Starteralkoxylat, bevorzugt mindestens 0,020 mol basischem Katalysator pro mol Starteralkoxylat erhöht wird.

Starteralkoxylat aus Stufe (I) wird dabei mit 3 bis 200, bevorzugt 7 bis 160, besonders bevorzugt 10 bis 140 mol Alkylenoxid pro mol Starteralkoxytat umgesetzt.

In einer Ausführungsform der vorliegenden Erfindung führt man Stufe (II) und die gegebenenfalls folgenden Stufe(n) des erfindungsgemäßen Verfahrens bei Reaktionstemperaturen von 110°C bis 180°C, bevorzugt 120°C bis 170°C, besonders bevorzugt 130°C bis 160°C durch.

In einer Ausführungsform der vorliegenden Erfindung führt man Stufe (II) und die gegebenenfalls folgenden Stufe(n) des erfindungsgemäßen Verfahrens bei Normaldruck durch. In einer anderen Ausführungsform der vorliegenden Erfindung führt man Stufe (II) und die gegebenenfalls folgenden Stufen des erfindungsgemäßen Verfahrens bei erhöhtem Druck durch, beispielsweise bei 1,01 bis 10 bar.

Es wird gefunden, dass durch die Katalysatorkonzentration in Schritt (I) die Onset-Temperatur der exothermen Nebenreaktion auf Werte über 285°C, bevorzugt über 290°C, besonders bevorzugt über 300°C, insbesondere bevorzugt über 310°C gehoben werden kann. Diese sehr niedrigen Katalysatorkonzentrationen führen aber zu einer stark reduzierten Reaktionsgeschwindigkeit, was für das Verfahren wirtschaftlich prohibitiv sein kann.

In einer Ausführungsform der vorliegenden Erfindung gibt man insgesamt mindestens 0,015 mol an basischem Katalysator pro mol Starter zu.

Die erfindungsgemäße Mehrstufigkeit der Alkoxylierung kann in verschiedenen Ausführungsformen realisiert werden.

Eine der Ausführungsformen ist es, den Starter mit der niedrigen Konzentration an Katalysator in einer ersten Stufe mit Alkylenoxid umzusetzen, dann Katalysator in den Reaktor nachzudosieren und das im Reaktor befindliche Gemisch weiter mit Alkylenoxid umzusetzen.

In einer Variante dieser Ausführungsform wird die erste Stufe der Umsetzung und gegebenenfalls ein Teil der folgenden Stufe in einem Reaktor durchgeführt und das Reaktionsgemisch dann in einen anderen Reaktor überführt, in dem der Rest der Folgestufe durchgeführt wird.

In einer anderen Ausführungsform wird die Stufe (I) des erfindungsgemäßen Verfahrens in einem Reaktor durchgeführt. Das dabei erhaltene Zwischenprodukt, das Starteralkoxylat, wird dann in ein anderes Gefäß, beispielsweise einen Tank überführt und dort gelagert. Für die Durchführung der zweiten Stufe wird dann das in einem anderen Gefäß zwischengelagerte Starteralkoxylat als neuer Starter im Reaktor vorgelegt und die folgende Stufe (II) und gegebenenfalls weitere Stufen des erfindungsgemäßen Verfahrens durchgeführt. Gegebenenfalls wird auch das Produkt aus Stufe (II) in ein anderes Gefäß, beispielsweise in einem Tank, überführt und dort gelagert werden und als Starter für die Umsetzung in einer dritten Stufe dienen.

Das heißt, dass die zwei oder mehr Stufen der Umsetzung in demselben Reaktor stattfinden können, aber nicht notwendigerweise müssen.

Durch das erfindungsgemäße Verfahren erhaltene Polyetheralkohole zeichnen sich durch verbesserte Reinheit aus.

Durch das erfindungsgemäße Verfahren erhaltene Polyetheralkohole lassen sich als oder zur Herstellung von Fließverbesserern für Baumaterialien, beispielsweise Beton, verwenden.

Die nachfolgenden Beispiele erläutern die Erfindung näher, ohne sie jedoch zu beschränken.

Basischer Katalysator wird oft auch kurz als Base bezeichnet.

Die Hydroxylzahl wurde jeweils nach DIN 53240 bestimmt. Druckangaben in mbar bzw. bar betreffen stets den absoluten Druck.

### Vergleichsbeispiele 1 - 4

In einer Apparatur zur Messung der dynamischen Differenzkalorimetrie (Mettler TA 8000) wurde die in Tabelle 1 angegebenen Menge an 4-Hydroxybutylvinylether (HBVE), welche die in Tabelle 1 angegebene Konzentration an basischem Katalysator enthielt, in einen V4A Tiegel unter Stickstoffatmosphäre mit einer Heizrate von 2,5 K/min hochgeheizt. Dabei wurden die in Tabelle 1 angegebenen Onset-Temperaturen und freigesetzten Wärmemengen gefunden.

K/min hochgeheizt. Dabei wurden die in Tabelle 1 angegebenen Onset-Temperaturen und freigesetzten Wärmemengen gefunden.

**Tabelle 1: Onset-Temperaturen von HBVE mit basischem Katalysator**

| Masse HBVE [mg] | basischer Katalysator | Konzentration Base [mol Base pro mol HBVE] | Onset-Temperatur [°C] | Freigesetzte Wärmemenge [J/g] |
|---|---|---|---|---|
| 23,7 | Kaliummethanolat | 0,098 | 170 | 340 |
| 27,3 | Natriummethanolat | 0,093 | 180 | 320 |
| 24,1 | Natriumhydroxid | 0,091 | 185 | 350 |
| 28,7 | Kaliumhydroxid | 0,074 | 170 | 580 |

### Beispiel 5 - 8:

In einer Apparatur zur Messung der dynamischen Differenzkalorimetrie (Mettler TA 8000) wurde die in Tabelle 2 angegebenen Menge an 4-Hydroxybutylvinylether (HBVE) bzw. HBVE-Ethoxylat (HBVE + 5 EO), welche die in Tabelle 2 angegebene Konzentration an Kaliummethanolat als basischen Katalysator enthielten, in einen V4A Tiegel unter Stickstoffatmosphäre mit einer Heizrate von 2,5 K/min hochgeheizt.

Dabei wurden die in Tabelle 2 angegebenen Onset-Temperaturen und freigesetzten Wärmemengen gefunden.

**Tabelle 2: Onset-Temperaturen von HBVE bzw. HBVE + 5 EO mit basischem Katalysator**

| Stoff | Eingewogene Masse [mg] | Konzentration Base [mol Base pro mol HBVE] | Onset-Temperatur [°C] | Freigesetzte Wärmemenge [J/g] |
|---|---|---|---|---|
| HBVE | 19,8 | 0,0017 | 310 | 380 |
| HBVE | 21,8 | 0,0033 | 305 | 490 |
| HBVE | 21,5 | 0,0066 | 295 | 510 |
| HBVE +5 EO | 28,7 | 0,0912 | 295 | 690 |

| | | | | |
|---|---|---|---|---|
| EO: Ethylenoxid | | | | |

### Beispiel 9:

### Herstellung von HBVE + 22 EO mit Kaliummethanolat als Katalysator:

In einem 1-Liter-Reaktor wurden 71,3 g 4-Hydroxybutylvinylether (HBVE) und 0,45 g Kaliummethanolat-Lösung (32 Gew.-% Kaliummethanolat in Methanol) vorgelegt (0,0033 mol Base / mol HBVE).

Der 1-Liter-Reaktor wurde auf 80°C hochgeheizt. Anschließend wurde der 1-Liter-Reaktor bis auf 50 mbar evakuiert und das Vakuum mit Stickstoff gebrochen. Das Evakuieren und Brechen des Vakuums mit Stickstoff wurde dreimal wiederholt. Anschließend wurde der 1-Liter-Reaktor auf 140°C hochgeheizt und Stickstoff bis zu einem Druck von 1,5 bar aufgedrückt.

In den so inertisierten Reaktor wurden bei 140°C 135,2 g Ethylenoxid zugefahren. Nach 30 min Abreaktionszeit wurde der 1-Liter-Reaktor auf 80°C abgekühlt und 2,95 g Kaliummethanolat-Lösung (32 Gew.-% Kaliummethanolat in Methanol) zugegeben (insgesamt: 0,025 mol Base / mol HBVE).

Anschließend wurde der 1-Liter-Reaktor bis auf 50 mbar evakuiert und das Vakuum mit Stickstoff gebrochen. Das Evakuieren und Brechen des Vakuums mit Stickstoff wurde dreimal wiederholt.

Anschließend wurde der 1-Liter-Reaktor auf 140°C hochgeheizt und Stickstoff auf 1,5 bar aufgedrückt.

Bei 140°C wurden dann weitere 460,8 g Ethylenoxid in den Reaktor zugefahren. Nach einer Nachreaktionszeit von 30 min wurde der 1-Liter-Reaktor auf 80°C abgekühlt und entspannt. Man erhielt erfindungsgemäß hergestelltes PEA-9. Anschließend wurden 67 mg para-tert.-Butylcatechol zugegeben, um das PEA-9 zu stabilisieren.

Die Hydroxylzahl von PEA-9 betrug 51,4 mg KOH/g und die kinematische Viskosität betrug 62,5 mm²/s (bei 50°C).

### Beispiel 10: Herstellung von HBVE + 22 EO mit Natriummethanolat als Katalysator:

In einem 1-Liter-Reaktor wurden 71,3 g 4-Hydroxybutylvinylether und 0,48 g Natriummethanolat-Lösung (30 Gew.-% Natriummethanolat in Methanol) vorgelegt (0,0043 mol Base / mol HBVE).

Der 1-Liter-Reaktor wurde auf 80°C hochgeheizt. Anschließend wurde der 1-Liter-Reaktor bis auf 50 mbar evakuiert und das Vakuum mit Stickstoff gebrochen. Das Evakuieren und Brechen des Vakuums mit Stickstoff wurde dreimal wiederholt. Anschließend wurde der 1-Liter-Reaktor auf 140°C hochgeheizt und Stickstoff bis zu einem Druck von 1,5 bar aufgedrückt.

In den so inertisierten Reaktor wurden bei 140°C 135,2 g Ethylenoxid zugefahren. Nach 30 min Abreaktionszeit wurde der 1-Liter-Reaktor auf 80°C abgekühlt und 2,32 g Natriummethanolat (30 Gew.-% Natrium in Methanol) zugegeben (insgesamt: 0,025 mol Base / mol HBVE).

Anschließend wurde der 1-Liter-Reaktor bis auf 50 mbar evakuiert und das Vakuum mit Stickstoff gebrochen. Das Evakuieren und Brechen des Vakuums mit Stickstoff wurde dreimal wiederholt.

Anschließend wurde der 1-Liter-Reaktor auf 140°C hochgeheizt und Stickstoff auf 1,5 bar aufgedrückt.

Bei 140°C wurden dann weitere 460,8 g Ethylenoxid in den Reaktor zugefahren. Nach einer Nachreaktionszeit von 30 min wurde der 1-Liter-Reaktor auf 80°C abgekühlt und entspannt. Man erhielt erfindungsgemäß hergestelltes PEA-10. Anschließend wurden 67 mg para-tert.-Butylcatechol zugegeben, um das PEA-10 zu stabilsieren.

Die Hydroxylzahl von PEA-10 betrug 51,0 mg KOH/g und die kinematische Viskosität betrug 63,0 mm²/s (bei 50°C).

### Beispiel 11: Herstellung von HBVE + 5 EO nach Stufe (I) des erfindungsgemäßen Verfahrens (Stufe (I) extern gelagert):

In einem 1-Liter-Reaktor wurden 231 g 4-Hydroxybutylvinylether und 1,44 g Kaliummethanolat-Lösung (32 Gew.-% Kaliummethanolat in Methanol) vorgelegt (0,0033 mol Base / mol HBVE).

Der 1-Liter-Reaktor wurde auf 80°C hochgeheizt. Anschließend wurde der 1-Liter-Reaktor bis auf 50 mbar evakuiert und das Vakuum mit Stickstoff gebrochen. Das Evakuieren und Brechen des Vakuums mit Stickstoff wurde dreimal wiederholt.

Anschließend wurde der 1-Liter-Reaktor auf 140°C hochgeheizt und Stickstoff bis zu einem Druck von 1,5 bar aufgedrückt.

In den so inertisierten 1-Liter-Reaktor wurden bei 140°C 439 g Ethylenoxid zugefahren. Nach 30 min Abreaktionszeit wurde der 1-Liter-Reaktor auf 80°C abgekühlt, entspannt und das so erhältliche PEA-11 ausgetragen.

Die Hydroxylzahl von PEA-11 betrug 166,9 mg KOH/g.

### Beispiel 12: Herstellung von HBVE + 22 EO:

In einem 1-Liter-Reaktor wurden 206 g PEA-11 vorgelegt und 2,95 g Kaliummethanolat-Lösung (32 Gew.-% Kaliummethanolat in Methanol) zugegeben (insgesamt: 0,025 mol Base / mol HBVE).

Der 1-Liter-Reaktor wurde auf 80°C hochgeheizt. Anschließend wurde der 1-Liter-Reaktor bis auf 50 mbar evakuiert und das Vakuum mit Stickstoff gebrochen. Das Evakuieren und Brechen des Vakuums mit Stickstoff wurde dreimal wiederholt. Anschließend wurde der 1-Liter-Reaktor auf 140°C hochgeheizt und Stickstoff bis zu einem Druck von 1,5 bar aufgedrückt.

In den so inertisierten 1-Liter-Reaktor wurden bei 140°C 464 g Ethylenoxid zugefahren. Nach einer Nachreaktionszeit von 30 min wurde der 1-Liter-Reaktor auf 80°C abgekühlt und entspannt. Man erhielt erfindungsgemäß hergestelltes PEA-12. Anschließend wurden 67 mg para-tert.-Butylcatechol zugegeben, um das PEA-12 zu stabilisieren.

Die Hydroxylzahl von PEA-12 betrug 51,2 mg KOH/g und die kinematische Viskosität betrug 62,7 mm²/s (bei 50°C).

### Beispiel 13: Herstellung von HBVE + 5 EO nach Stufe (I) des erfindungsgemäßen Verfahrens (Stufe (I) extern gelagert)

In einem 1-Liter-Reaktor wurden 231 g 4-Hydroxybutylvinylether und 1,54 g Natriummethanolat-Lösung (30 Gew.-% Natriummethanolat in Methanol) vorgelegt (0,0043 mol Base / mol HBVE).

Der 1-Liter-Reaktor wurde auf 80°C hochgeheizt. Anschließend wurde der 1-Liter-Reaktor bis auf 50 mbar evakuiert und das Vakuum mit Stickstoff gebrochen. Das Evakuieren und Brechen des Vakuums mit Stickstoff wurde dreimal wiederholt.

Anschließend wurde der 1-Liter-Reaktor auf 140°C hochgeheizt und Stickstoff bis zu einem Druck von 1,5 bar aufgedrückt.

In den so inertisierten 1-Liter-Reaktor wurden bei 140°C 439 g Ethylenoxid zugefahren. Nach 30 min Abreaktionszeit wurde der 1-Liter-Reaktor auf 80°C abgekühlt, entspannt und das so hergestellte PEA-13 ausgetragen.

Die Hydroxylzahl von PEA-13 betrug 167,1 mg KOH/g.

### Beispiel 14: Herstellung von HBVE + 22 EO:

In einem 1-Liter-Reaktor wurden 206 g PEA-13 vorgelegt und 2,32 g Natriummethanolat-Lösung (30 Gew.-% Natriummethanolat in Methanol) zugegeben (insgesamt: 0,025 mol Base / mol HBVE).

Der 1-Liter-Reaktor wurde auf 80°C hochgeheizt. Anschließend wurde der 1-Liter-Reaktor bis auf 50 mbar evakuiert und das Vakuum mit Stickstoff gebrochen. Das Evakuieren und Brechen des Vakuums mit Stickstoff wurde dreimal wiederholt.

Anschließend wurde der 1-Liter-Reaktor auf 140°C hochgeheizt und Stickstoff bis zu einem Druck von 1,5 bar aufgedrückt.

In den so inertisierten 1-Liter-Reaktor wurden bei 140°C 464 g Ethylenoxid zugefahren.

Nach einer Nachreaktionszeit von 30 min wurde der 1-Liter-Reaktor auf 80°C abgekühlt und entspannt. Man erhielt erfindungsgemäß hergestelltes PEA-14. Anschließend wurden 67 mg para-tert.-Butylcatechol zugegeben, um PEA-14 zu stabilsieren.

Die Hydroxylzahl von PEA-14 betrug 52,0 mg KOH/g und die kinematische Viskosität betrug 61,9 mm²/s (bei 50°C).

### Beispiel 15: Herstellung von HBVE + 27 EO (Stufe (II), extern gelagert)

In einem 1-Liter-Reaktor wurden 172 g PEA-11 und 9,64 g Kaliummethanolat-Lösung (32 Gew.-% Kaliummethanolat in Methanol) vorgelegt (0,0861 mol Base / mol HBVE). Der 1-Liter-Reaktor wurde auf 80°C hochgeheizt. Anschließend wurde der 1-Liter-Reaktor bis auf 50 mbar evakuiert und das Vakuum mit Stickstoff gebrochen. Das Evakuieren und Brechen des Vakuums mit Stickstoff wurde dreimal wiederholt.

Anschließend wurde der 1-Liter-Reaktor auf 140°C hochgeheizt und Stickstoff bis zu einem Druck von 1,5 bar aufgedrückt.

In den so inertisierten 1-Liter-Reaktor wurden bei 140°C 498 g Ethylenoxid zugefahren. Nach 30 min Abreaktionszeit wurde der 1-Liter-Reaktor auf 80°C abgekühlt, entspannt und das so hergestellte PEA-15 ausgetragen.

Die Hydroxylzahl von PEA-15 betrug 42,8 mg KOH/g.

### Beispiel 16: Herstellung von HBVE + 128 EO (Stufe (III))

In einem 1-Liter-Reaktor wurden 151 g PEA-15 (0,0861 mol Base / mol HBVE) vorgelegt.

Der 1-Liter-Reaktor wurde auf 80°C hochgeheizt. Anschließend wurde der 1-Liter-Reaktor bis auf 50 mbar evakuiert und das Vakuum mit Stickstoff gebrochen. Das Evakuieren und Brechen des Vakuums mit Stickstoff wurde dreimal wiederholt.

Anschließend wurde der 1-Liter-Reaktor auf 140°C hochgeheizt Stickstoff bis zu einem Druck von 1,5 bar aufgedrückt.

In den so inertisierten 1-Liter-Reaktor wurden bei 140°C 519 g Ethylenoxid zugefahren.

Nach 60 min Abreaktionszeit wurde der 1-Liter-Reaktor auf 80°C abgekühlt und entspannt. Man erhielt erfindungsgemäß hergestelltes PEA-16. Anschließend wurden 67 mg para-tert.-Butylcatechol zugegeben, um PEA-16 zu stabilisieren.

Die Hydroxylzahl von PEA-16 betrug 10,1 mg KOH/g und die kinematische Viskosität betrug 530 mm²/s (bei 80°C).

### Beispiel 17: Herstellung von HBVE + 27 EO (Stufe (II), extern gelagert)

In einem 1-Liter-Reaktor wurden 172 g PEA-13 und 7,93 g Natriummethanolat-Lösung (30 Gew.-% Natriummethanolat in Methanol) vorgelegt (0,0861 mol Base / mol HBVE). Der 1-Liter-Reaktor wurde auf 80°C hochgeheizt. Anschließend wurde der 1-Liter-Reaktor bis auf 50 mbar evakuiert und das Vakuum mit Stickstoff gebrochen. Das Evakuieren und Brechen des Vakuums mit Stickstoff wurde dreimal wiederholt. Anschließend wurde der 1-Liter-Reaktor auf 140°C hochgeheizt und Stickstoff bis zu einem Druck von 1,5 bar aufgedrückt.

In den so inertisierten 1-Liter-Reaktor wurden bei 140°C 498 g Ethylenoxid zugefahren. Nach 30 min Abreaktionszeit wurde der 1-Liter-Reaktor auf 80°C abgekühlt, entspannt und das so erhältliche erfindungsgemäß hergestellte PEA-17 ausgetragen.

Die Hydroxylzahl von PEA-17 betrug 43,1 mg KOH/g.

### Beispiel 18: Herstellung von HBVE + 128 EO

In einem 1-Liter-Reaktor wurden 151 g PEA-17 (0,0861 mol Base / mol HBVE) vorgelegt.

Der 1-Liter-Reaktor wurde auf 80°C hochgeheizt. Anschließend wurde der 1-Liter-Reaktor bis auf 50 mbar evakuiert und das Vakuum mit Stickstoff gebrochen. Das Evakuieren und Brechen des Vakuums mit Stickstoff wurde dreimal wiederholt.

Anschließend wurde der 1-Liter-Reaktor auf 140°C hochgeheizt und Stickstoff bis zu einem Druck von 1,5 bar aufgedrückt.

In den so inertisierten 1-Liter-Reaktor wurden bei 140°C 519 g Ethylenoxid zugefahren.

Nach 60 min Abreaktionszeit wurde der 1-Liter-Reaktor auf 80°C abgekühlt und entspannt. Man erhielt erfindungsgemäß hergestelltes PEA-18. Anschließend wurden 67 mg para-tert.-Butylcatechol zugegeben, um PEA-18 zu stabilisieren.

Die Hydroxylzahl von PEA-18 betrug 9,7 mg KOH/g und die kinematische Viskosität betrug 550 mm²/s (bei 80°C).

### Beispiel 19: Herstellung von HBVE + 128 EO

In einem 1-Liter-Reaktor wurden 172 g PEA-11 und 9,64 g Kaliummethanolat-Lösung (32 Gew.-% Kaliummethanolat in Methanol) vorgelegt (0,0861 mol Base / mol HBVE).

Der 1-Liter-Reaktor wurde auf 80°C hochgeheizt. Anschließend wurde der 1-Liter-Reaktor bis auf 50 mbar evakuiert und das Vakuum mit Stickstoff gebrochen. Das Evakuieren und Brechen des Vakuums mit Stickstoff wurde dreimal wiederholt.

Anschließend wurde der 1-Liter-Reaktor auf 140°C hochgeheizt und Stickstoff bis zu einem Druck von 1,5 bar aufgedrückt.

In den so inertisierten 1-Liter-Reaktor wurden bei 140°C 498 g Ethylenoxid zugefahren. Nach 30 min Abreaktionszeit wurde das Produkt aus dem 1-Liter-Reaktor in einen 5-Liter-Reaktor gedrückt.

Anschließend wurde der 5-Liter-Reaktor auf 140°C hochgeheizt und Stickstoff auf 1,5 bar aufgedrückt. In den so inertisierten 5-Liter-Reaktor wurden bei 140°C 2283 g Ethylenoxid zugefahren.

Nach 60 min Abreaktionszeit wurde der 5-Liter-Reaktor auf 80°C abgekühlt und entspannt. Man erhielt erfindungsgemäß hergestelltes PEA-19. Anschließend wurden 67 mg para-tert.-Butylcatechol zugegeben, um PEA-19 zu stabilsieren.

Die Hydroxylzahl von PEA-19 betrug 10,3 mg KOH/g und die kinematische Viskosität betrug 510 mm²/s (bei 80°C).

### Beispiel 20: Herstellung von HBVE + 128 EO (Stufe (II) (HBVE+27 EO), extern gelagert):

In einem 1-Liter-Reaktor wurden 172 g PEA-13 und 7,93 g Natriummethanolat-Lösung (30 Gew.-% Natriummethanolat in Methanol) vorgelegt (0,0861 mol Base / mol HBVE). Der 1-Liter-Reaktor wurde auf 80°C hochgeheizt. Anschließend wurde der 1-Liter-Reaktor bis auf 50 mbar evakuiert und das Vakuum mit Stickstoff gebrochen. Das Evakuieren und Brechen des Vakuums mit Stickstoff wurde dreimal wiederholt.

Anschließend wurde der 1-Liter-Reaktor auf 140°C hochgeheizt und Stickstoff bis zu einem Druck von 1,5 bar aufgedrückt.

In den so inertisierten 1-Liter-Reaktor wurden bei 140°C 498 g Ethylenoxid zugefahren.

Nach 30 min Abreaktionszeit wurde das Produkt aus dem 1-Liter-Reaktor in einen 5-Liter-Reaktor gedrückt.

Anschließend wurde der 5-Liter-Reaktor auf 140°C hochgeheizt und Stickstoff auf 1,5 bar aufgedrückt. In den so inertisierten 5-Liter-Reaktor wurden bei 140°C 2283 g Ethylenoxid zugefahren.

Nach 60 min Abreaktionszeit wurde der 5-Liter-Reaktor auf 80°C abgekühlt und entspannt. Man erhielt erfindungsgemäß hergestelltes PEA-20. Anschließend wurden 67 mg para-tert.-Butylcatechol zugegeben, um PEA-20 zu stabilisieren.

Die Hydroxylzahl von PEA-20 betrug 9,9 mg KOH/g und die kinematische Viskosität betrug 540 mm²/s (bei 80°C).

## Patentansprüche

1. Verfahren zur Herstellung von Polyetheralkoholen durch Umsetzung von mindestens einem Alkylenoxid mit mindestens einem ungesättigten Starter mit mindestens einem aktiven Wasserstoffatom pro Molekül unter basischer Katalyse,
**dadurch gekennzeichnet, dass** man die Alkoxylierung in mindestens zwei Stufen durchführt,
wobei man in Stufe (I) die Alkoxylierung des oder der Starter mit maximal 10 mol Alkylenoxid pro mol Starter mit einer Katalysatorkonzentration von maximal 0,00415 mol an basischem Katalysator pro Mol Starter durchführt, und
in Stufe (II) und der oder den gegebenenfalls folgenden Stufen den oder die alkoxylierten Starter aus Stufe (I) mit weiterem Alkylenoxid bei einer Katalysatorkonzentration von mindestens 0,015 mol an basischem Katalysator pro mol Starter umsetzt.

2. Verfahren nach Anspruch 1, **dadurch gekennzeichnet, dass** der oder die Starter eine Allyl- oder Vinylgruppe aufweisen.

3. Verfahren nach Anspruch 1 oder 2, **dadurch gekennzeichnet, dass** der oder die Starter Vinyletheralkohole sind.

4. Verfahren nach einem der Ansprüche 1 bis 3, **dadurch gekennzeichnet, dass** der Starter mit aktiven Wasserstoffatomen 4-Hydroxybutylvinylether ist.

5. Verfahren nach einem der Ansprüche 1 bis 4, **dadurch gekennzeichnet, dass** Alkylenoxid gewählt wird aus Ethylenoxid und Propylenoxid.

6. Verfahren nach einem der Ansprüche 1 bis 5, **dadurch gekennzeichnet, dass** man als basischen Katalysator Natrium- und/oder Kaliumhydroxid und/oder -alkoholat verwendet.

7. Verfahren nach einem der Ansprüche 1 bis 6, **dadurch gekennzeichnet, dass** die Mischung von basischem Katalysator mit Starter eine Onset-Temperatur von maximal 285 °C aufweist.

8. Verfahren nach einem der Ansprüche 1 bis 7, **dadurch gekennzeichnet, dass** man in Stufe (I) die Alkoxylierung des oder der Starter(s) mit 5 bis 7 mol Alkylenoxid pro mol Starter durchführt.

## Claims

1. A process for the preparation of polyether alcohols by reacting at least one alkylene oxid with at least one unsaturated starter heaving at least one active hydrogen atom per molecule under basic catalysis,
wherein the alkoxylation is carried out in at least two stages,
in stage (I) the alkoxylation of the starter or starters being carried out with not more than 10 mol of alkylene oxide per mole of starter with a catalyst concentration of not more than 0.00415 mol of basic catalyst per mole of starter and
in stage (II) and the optionally following stage or stages, the alkoxylated starter or starters from stage (I) being reacted with further alkylene oxide at a catalyst concentration of at least 0.015 mol of basic catalyst per mole of starter.

2. The process according to claim 1, wherein the starter or starters have an allyl or vinyl group.

3. The process according to claim 1 or 2, wherein the starter or starters are vinyl ether alcohols.

4. The process according to any of claims 1 to 3, wherein the starter heaving active hydrogen atoms is 4-hydroxybutyl vinyl ether.

5. The process according to any of claims 1 to 4, wherein alkylene oxide is selected from ethylene oxide and propylene oxide.

6. The process according to any of claims 1 to 5, wherein sodium and/or potassium hydroxide and/or alcoholate is used as the basic catalyst.

7. The process according to any of claim 1 to 6, wherein the mixture of basic catalyst with starter has an onset temperature of not more than 285°C.

8. The process according to any of claims 1 to 7, wherein, in stage (I), the alkoxylation of the starter or starters is carried out with 5 to 7 mol of alkylene oxide per mole of starter.

## Revendications

1. Procédé pour la production de polyétheralcools par mise en réaction d'au moins un oxyde d'alkylène avec au moins un amorceur insaturé comportant au moins un atome d'hydrogène actif par molécule, avec catalyse acide,
**caractérisé en ce qu'**on effectue l'alcoxylation en au moins deux étapes,
en effectuant dans l'étape (I) l'alcoxylation de l'amorceur ou des amorceurs avec au maximum 10 moles d'oxyde d'alkylène par mole d'amorceur avec une concentration de catalyseur d'au maximum 0,00415 mole de catalyseur basique par mole d'amorceur, et
en faisant réagir dans l'étape (II) et l'étape ou les étapes éventuellement suivante(s) l'amorceur ou les amorceurs alcoxylé(s) provenant de l'étape (I) avec une nouvelle quantité d'oxyde d'alkylène à une concentration de catalyseur d'au moins 0,015 mole de catalyseur basique par mole d'amorceur.

2. Procécé selon la revendication 1, **caractérisé en ce que** l'amorceur ou les amorceurs comporte(nt) un groupe allyle ou vinyle.

3. Procécé selon la revendication 1 ou 2, **caractérisé en ce que** l'amorceur ou les amorceurs sont des vinylétheralcools.

4. Procécé selon l'une quelconque des revendications 1 à 3, **caractérisé en ce que** l'amorceur comportant des atomes d'hydrogène actifs est l'éther 4-hydroxybutylvinylique.

5. Procécé selon l'une quelconque des revendications 1 à 4, **caractérisé en ce que** l'oxyde d'alkylène est choisi parmi l'oxyde d'éthylène et l'oxyde de propylène.

6. Procécé selon l'une quelconque des revendications 1 à 5, **caractérisé en ce qu'**on utilise comme catalyseur basique l'hydroxyde et/ou un alcoolate de sodium et/ou potassium.

7. Procécé selon l'une quelconque des revendications 1 à 6, **caractérisé en ce que** le mélange de catalyseur basique et amorceur présente une température au début d'au maximum 285 °C.

8. Procédé selon l'une quelconque des revendications 1 à 7, caractérisé sen ce que dans l'étape (I) on effectue l'alcoxylation de l'amorceur ou des amorceurs avec 5 à 7 moles d'oxyde d'alkylène par mole d'amorceur.
